# EUROPEAN PATENT APPLICATION

(11) **EP 2 168 444 A1**
(43) Date of publication of application: **31.03.2010**
(21) Application number: 08165032.7
(22) Date of filing: 24.09.2008
(51) Int. Cl.: A23L 1/29, A23L 1/30

(54) **Acidified nutritional formula**

(71) Applicant: Nestec S.A., 1800 Vevey (CH)
(72) Inventor: The designation of the inventor has not yet been filed
(74) Representative: Dixon, Sarah

(57) **Abstract**

A nutritional formula having a pH in the liquid state in the range from 4.8 to 5.2, which formula comprises, on a dry matter basis, lactic acid in an amount of not more than 2.0% and at least 0.5% of a salt of lactic acid.

## Description

The present invention relates to an acidified nutritional formula with improved taste and to a process of manufacturing such a nutritional formula.

### The Background Art

Mother's milk is recommended for all infants. However, in some cases breast feeding is inadequate or unsuccessful or inadvisable for medical reasons or the mother chooses not to breast feed. Infant formulas have been developed for these situations.

Generally infant formulas are available in powder form, concentrated liquid form, or ready to feed liquid form. Powdered infant formulas are the most popular form; primarily due to their cost and nutritional quality. The key disadvantage with powdered infant formulas is the inconvenience of preparation. The powdered formula must be spooned into a sterilised drinking vessel, water which has been boiled and allowed to cool is then poured into the drinking vessel to reconstitute the formula, the drinking vessel is then sealed and shaken to ensure the powder has been dissolved. To avoid any bacterial growth, the formula should then be consumed immediately after reconstitution.

If prepared and consumed in this manner, powdered infant formulas provide a safe and nutritionally gcod substitute for mother's milk in the situations described above. However, primarily due to the inconvenient preparation, many parents or caregivers do not prepare the formulas properly and hence expose the infant to risks of infection or other risks. For example, the water may not be boiled prior to use in which case, any pathogens in the water are fed to the infant. Usually water sources in developed countries are safe but this may not be the case everywhere. Alternatively, batches of the infant formula may be prepared and then stored until needed. Unfortunately, if any pathogen has contaminated the formula, it then has time to replicate.

Typical bacterial pathogens that can cause infant diarrhoea include *Escherichia coli, Salmonella* and *Shigella,* for example. However, viruses (rotaviruses, caliciviruses) and protozoic parasites, such as *Cryptosporidium* are also frequently associated with infant diarrhoea. Formula feeding may increase the risk of such gastrointestinal infections if the proper instructions for reconstitution are not scrupulously observed.

One way of approaching the problem is the addition of a specific anti-microbial agents, as is taught in WO 96/25054. However, for infants the consumption of anti-microbial agents on a regular basis should be avoided because of potential damage to the liver and, in addition, because anti-microbial agents often exhibit undesirable side effects.

A nutritionally safe and effective way of inhibiting growth of bacteria in a reconstituted infant formula is acidification. Various powdered infant formulas that have a relatively low pH when made up are marketed, for example under the trademarks Pelargon®, Bionan® and Bioguigoz®. However, the process by which acidification is achieved is time and cost intensive: the basic ingredients of an infant formula are fermented with lactic acid bacteria until a specific pH is achieved, the fermentation is interrupted, the liquid is pasteurised and processed to a powder. The fermentation has to be controlled carefully, because it may in itself provide growth possibilities for pathogenic bacteria and also for bacteriophages which can interfere with the fermentation process. Further, the pH of such formulas cannot be adjusted very accurately or reliably standardised to a specific value.

More recently and as described in WO2004/054371 a process has been developed for the acidification of nutritional compositions such as infant formulas by the direct addition of L(+) lactic acid with the intention of producing a composition which, when reconstituted ready for consumption, has a pH in the range from 3.5 to 6, preferably 3.5 to 5.5, more preferably in the range from 4.0 to 5.3, even more preferably in the range of 4.5 to 5.0, such as 4.6 to 4.8 for example. However, the taste of such products is not completely satisfactory.

### Summary of the Invention

Surprisingly, a way has now been found to increase the pH of directly acidified nutritional formulas thereby improving the taste and yet preserve the required degree of bacteriostatic activity.

Consequently, the present invention provides a nutritional formula having a pH in the liquid state in the range from 4.8 to 5.2, which formula comprises, on a dry matter basis, lactic acid in an amount of not more than 2.0% and at least 0.5% of a salt of lactic acid.

It is known that weak organic acids such as lactic acid can inhibit bacterial and fungal growth. Such acids exist in solution in a pH-dependent equilibrium between the un-dissociated and dissociated state. A reduction in pH shifts the equilibrium to the uncharged, un-dissociated state of the acid, thus optimal inhibitory activity is achieved at low pH because the un-dissociated acid is freely permeable across the plasma membrane and able to enter the bacterial cells. Upon encountering the higher pH inside the cell, the molecule then dissociates, releasing charged anions and protons. The cells use metabolic energy to cope with the pH decrease, thus inhibiting growth. Without wishing to be bound by theory, the present inventors believe that by supplementing the lactate concentration at a given pH, the concentration of un-dissociated lactic acid and therefore the bacteriostatic effect increase. The improved bacteriostatic effect (compared to an unsupplemented solution at the same pH) is believed to be due to the higher concentration of un-dissociated acid in solution. In this way, a bacteriostatic effect equivalent to that of an unsupplemented solution at lower pH can be achieved with a consequent improvement in the taste of the composition. In this connection, it should be borne in mind that, as pH is expressed on a logarithmic scale, quite small changes in pH of the order of 0.1 or 0.2 have a significant impact on taste.

### Brief Description of the Drawings

Figure 1 compares the growth of *E sakazakii* in various infant formulas at 30°C over a period of 6 hours;
Figure 2 compares the growth of *S typhimurium* in various infant formulas at 30°C over a period of 6 hours;
Figure 3 compares the growth of *S aureus* in various infant formulas at 30°C over a period of 6 hours;
Figure 4 compares the growth of *B cereus* in various infant formulas at 30°C over a period of 6 hours;
Figure 5 compares the growth of *P aeruginosa* in various infant formulas at 30°C over a period of 6 hours;
Figure 6 compares the growth of *E coli* in various infant formulas at 37°C over a period of 6 hours;
Figure 7 compares the growth *of P aeruginosa* in various infant formulas at 37°C over a period of 6 hours.

### Detailed Description of the Invention

In this specification, the following terms have the following meanings:-
"in the liquid state" means a nutritional formula which is ready to consume whether made and stored as a liquid or reconstituted with water or other liquid if made and stored as a powder:
   "L(+)-lactic acid" means S(+)-2-hydroxy propionic acid.

All percentages are percentages by weight, unless otherwise indicated.

Suitable salts of lactic acid include sodium lactate, potassium lactate and calcium lactate but calcium lactate is particularly preferred.

The nutritional formula may contain from 1.00 to 1.20% lactic acid. The nutritional formula may contain from 0.90 to 1.40% of a physiologically acceptable salt of lactic acid.

The total lactate content (i.e. including lactate ions deriving from both the lactic acid and the lactic acid salt)of the nutritional formula is preferably at least 70% L(+)-lactate.

The nutritional formula may be an infant formula.

An infant formula according to the present invention may contain a protein source in an amount of not more than 2.0 g/100kcal, preferably 1.8 to 2.0 g/100kcal. The type of protein is not believed to be critical to the present invention provided that the minimum requirements for essential amino acid content are met and satisfactory growth is ensured although it is preferred that over 50% by weight of the protein source is whey. Thus, protein sources based on whey, casein and mixtures thereof may be used as well as protein sources based on soy. As far as whey proteins are concerned, the protein source may be based on acid whey or sweet whey or mixtures thereof and may include alpha-lactalbumin and beta-lactoglobulin in whatever proportions are desired.

The proteins may be intact or hydrolysed or a mixture of intact and hydrolysed proteins. It may be desirable to supply partially hydrolysed proteins (degree of hydrolysis between 2 and 20%), for example for infants believed to be at risk of developing cows' milk allergy. If hydrolysed proteins are required, the hydrolysis process may be carried out as desired and as is known in the art. For example, a whey protein hydrolysate may be prepared by enzymatically hydrolysing the whey fraction in one or more steps. If the whey fraction used as the starting material is substantially lactose free, it is found that the protein suffers much less lysine blockage during the hydrolysis process. This enables the extent of lysine blockage to be reduced from about 15% by weight of total lysine to less than about 10% by weight of lysine; for example about 7% by weight of lysine which greatly improves the nutritional quality of the protein source.

The infant formula may contain a carbohydrate source. Any carbohydrate source conventionally found in infant formulae such as lactose, saccharose, maltodextrin, starch and mixtures thereof may be used although the preferred source of carbohydrates is lactose. Preferably the carbohydrate sources contribute between 35 and 65% of the total energy of the formula.

The infant formula may contain a source of lipids. The lipid source may be any lipid or fat which is suitable for use in infant formulas. Preferred fat sources include palm olein, high oleic sunflower oil and high oleic safflower oil. The essential fatty acids linoleic and α-linolenic acid may also be added as may small amounts of oils containing high quantities of preformed arachidonic acid and docosahexaenoic acid such as fish oils or microbial oils. In total, the fat content is preferably such as to contribute between 30 to 55% of the total energy of the formula. The fat source preferably has a ratio of n-6 to n-3 fatty acids of about 5:1 to about 15:1; for example about 8:1 to about 10:1.

The infant formula is acidified using lactic acid. If it is intended to feed the formula to infants under the age of three months, the lactic acid will preferably be in the form of the L(+) enantiomer as it is not recommended to feed the D(-) enantiomer or mixtures containing this to young infants.

The lactic acid may be added to the infant formula with the other ingredients either batch-wise or in-line although in-line addition is preferred. Alternatively, the lactic acid may be dry-mixed with a powdered infant formula although in this case it is necessary to use lactic acid of acceptable microbiological purity as the mixture will not undergo any further heat treatment. The calcium lactate is preferably also added by dry mixing. Suitable lactic acid and calcium lactate for dry mixing are available commercially, for example from PURAC biochem, Arkelsedijk 46, PO Box 21, 4200 AA Gorinchem, The Netherlands.

The infant formula may also contain all vitamins and minerals understood to be essential in the dai ly diet and in nutritionally significant amounts. Minimum requirements have been established for certain vitamins and minerals. Examples of minerals, vitamins and other nutrients optionally present in the infant formula include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-camitine. Minerals are usually added in salt form. The presence and amounts of specific minerals and other vitamins will vary depending on the intended infant population.

If necessary, the infant formula may contain emulsifiers and stabilisers such as soy lecithin, citric acid esters of mono- and di-glycerides, and the like.

The infant formula may optionally contain other substances which may have a beneficial effect such as lactoferrin, nucleotides, nucleosides, and the like.

A nutritional formula according to the present invention may be prepared by blending together the protein, the carbohydrate source, and the fat source in appropriate proportions. If used, the emulsifiers may be included at this point. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture. The liquid mixture may then be homogenised.

The homogenised liquid mixture may be thermally treated to reduce bacterial loads, by rapidly heating the liquid mixture to a temperature in the range of about 80°C to about 150°C for about 5 seconds to about 5 minutes, for example. This may be carried out by steam injection, autoclave or by heat exchanger; for example a plate heat exchanger.

Then, the liquid mixture may be cooled to about 60°C to about 85°C; for example by flash cooling. The L(+) lactic acid diluted to 35-65%, preferably 40-60%, by weight of L(+) lactic acid in water may be added in-line to the heat-treated solution at ambient temperature. pH may be controlled by in-line measurement, for example, allowing for adjusting pH during the in-line adding by way of a feedback mechanism.

The solids content of the mixture may conveniently be adjusted at this point followed by further heat treatment and homogenisation steps using similar conditions as before.

The mixture is then transferred to a suitable drying apparatus such as a spray drier or freeze drier and converted to powder. The powder should have a moisture content of less than about 5% by weight. Calcium lactate may be added to the powder by dry mixing.

### Example 1:

An acidified infant formula is prepared using the ingredients given in Table 1 below.

**Table 1**

| **Ingredient** | **Amount (wt%)** |
|---|---|
| Dried whey powder | 18.88 |
| Maltodextrin (DE 24-32) | 17.5 |
| Lactose | 16.56 |
| Palm oil | 13.0 |
| Skimmed milk powder | 16.04 |
| Low erucic rapeseed oil () | 4.7 |
| Coconut oil | 4.4 |
| Sunflower oil | 2.7 |
| Lactic acid¹ | 1.1 |
| Calcium lactate | 1.8 |
| Soy lecithin (at 62%) | 0.6 |
| Water | 2.1 |

Vitamins and minerals were added according to recommended values.

The lactose, maltodextrin, whey and skimmed milk powders were mixed with water at 50-60°C. The solution was standardised to a total solids content (TS) of 25%. Minerals were added to the solution which was then cooled to 8°C.

The solution was then pre-heated to 50°C in a double-jacket oil tank, and the palm oil, coconut oil, low erucic rapeseed oil, sunflower oil and soy lecithin. were added in-line. The solution was heated to 105°C, held at that temperature for 5 seconds and then passed to an evaporator where it was concentrated up to 40-50% total solids. The concentrated solution was passed to a buffer tank. L(+)-lactic acid was diluted in water to a concentration of about 10% at 4°C and the diluted acid was slowly added to the concentrated solution. The acidified concentrated solution was pre-heated to 75°C and homogenised.

The homogenised solution was spray-dried and the resulting powder was dry-mixed with the vitamins, the remaining minerals, the calcium lactate and a small part of the maltodextrin.

The resulting powdered infant formula may be reconstituted with water to prepare a ready to feed infant formula. The pH of the reconstituted formula was 5.0.

### Example 2: Microbiological Tests

The infant formulas shown in Table 2 below were subjected to microbiological challenge tests with the micro-organisms *Salmonella typhimurium* NCTC 12023, *Escherichia coli* NCTC 9001, *Pseudomonas aeruginosa* NCTC 10662, *Staphylococcus aureus* NCTC 651, *Bacillus cereus* NCTC 7464 and *Enterobacter sakazakii* FSM 263. The challenge organisms were supplied by The Health Protection Agency, Water EQA, Newcastle Laboratory, Institute of Pathology, General Hospital, Westgate Road, Newcastle upon Tyne, NE4 6BE.

The growth and dilution media used were Bacto Brain heart Infusion (BHI - BD237500), Maximum Recovery Diluent (MRD, Oxoid CM733), violet red bile glucose agar, brilliant green agar, *Bacillus cereus* selective agar, *Pseudomonas* agar base and Staph express disc.

The samples of formula were inoculated and analysed as follows. All formulas were prepared by reconstituting 13 9g of powdered formula in 900ml of sterile deionised water heated to 40°C. From each reconstituted sample, 2 x 200ml were aseptically dispensed into sterile Duran bottles. One bottle of each pair was inoculated with one the challenge strains to achieve a concentration of 10² cfu/ml

The various inoculated formulas were analysed by preparing 1 ml pour-plates with the appropriate growth medium. The plates were incubated at 37°C or 30°C for 24 hours, then the inoculated formula samples were added and the plates were incubated at 37°C or 30°C for up to a further 6 hours. Enumeration analyses were carried out after 2, 4 and 6 hours of incubation. The pH of the leftover (uninoculated formula) was measured.

**Table 2**

| **Product** | **Lactic acid** **(%w/w)** | **Calcium lactate** **(%w/w)** | **pH** |
|---|---|---|---|
| A | 1.4 | 0.0 | 4.6 |
| B | 1.2 | 1.0 | 4.8 |
| C | 1.1 | 0.9 | 4.9 |
| D | 1.0 | 2.0 | 5.1 |
| E | 1.2 | 1.0 | 4.9 |
| F | 1.1 | 1.0 | 5.0 |
| G | 1.0 | 1.0 | 5.0 |
| H | 1.2 | 1.4 | 4.8 |
| I | 1.1 | 1.4 | 4.9 |
| J | 1.0 | 1.4 | 5.0 |
| K* | 1.3 | 0.0 | 4.8 |
| L** | 0.0 | 0.0 | 7.0 |

| | | | |
|---|---|---|---|
| * commercially available acidified infant formula sold under the trade mark NAN PELARGON ® ** commercially available non-acidified infant formula sold under the trade mark LACTOGEN 1 ® | | | |

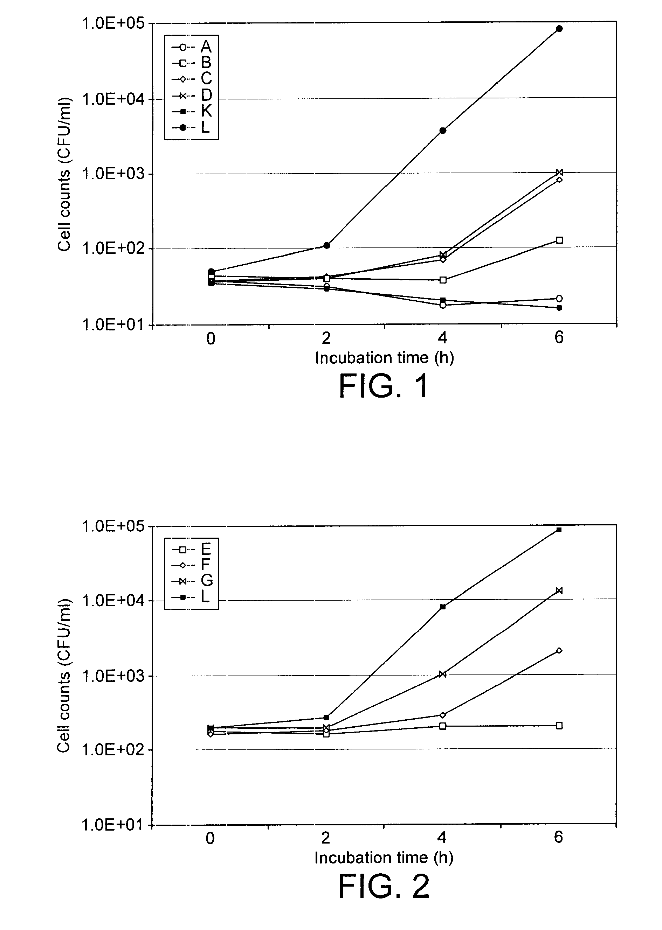

As may be seen from Figure 1, in formulas A, B, C and D according to the invention, growth of *E sakazakii* at 30°C was restricted to comparable levels to that found in a acidified formula containing lactic acid only and having a pH of 4.6 and to an acidified formula having a pH of 4.7 for a period of 4 hours.

Figure 2 shows the effect of four formulas on growth of *S typhimurium* at 30°C. It may be seen that formulas E, F and G according to the invention respectively restricted growth of the pathogen to acceptable levels for a period of 4 hours.

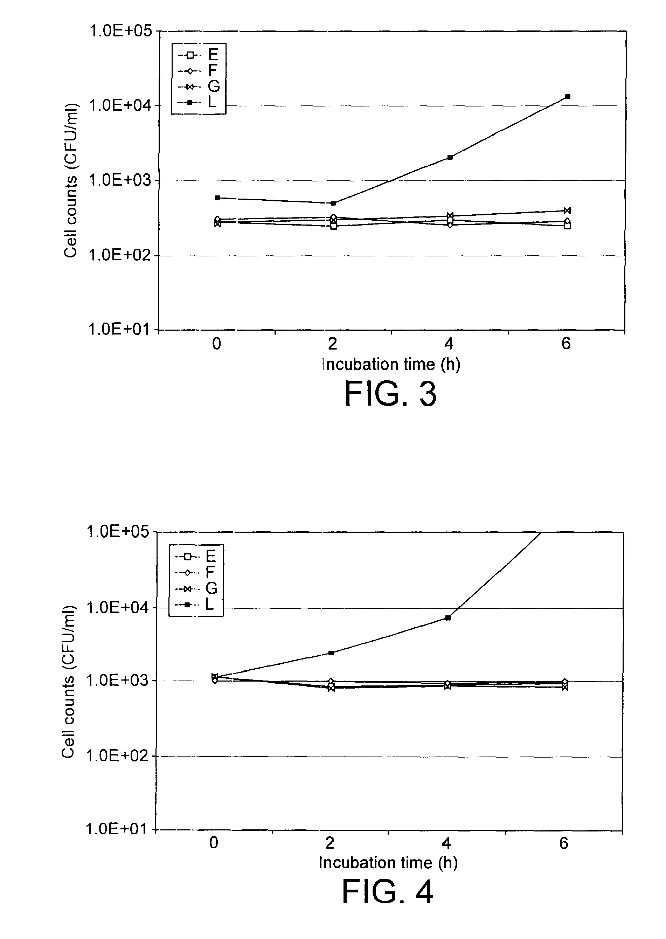

Figure 3 shows the effect of four formulas on growth of *S aureus* at 30°C. It may be seen that formulas E, F and G according to the invention respectively restricted growth of the pathogen to acceptable levels for a period of 4 hours.

Figure 4 shows the effect of four formulas on growth of *B cereus* at 30°C. It may be seen that formulas E; F and G according to the invention respectively restricted growth of the pathogen to acceptable levels for a period of 4 hours.

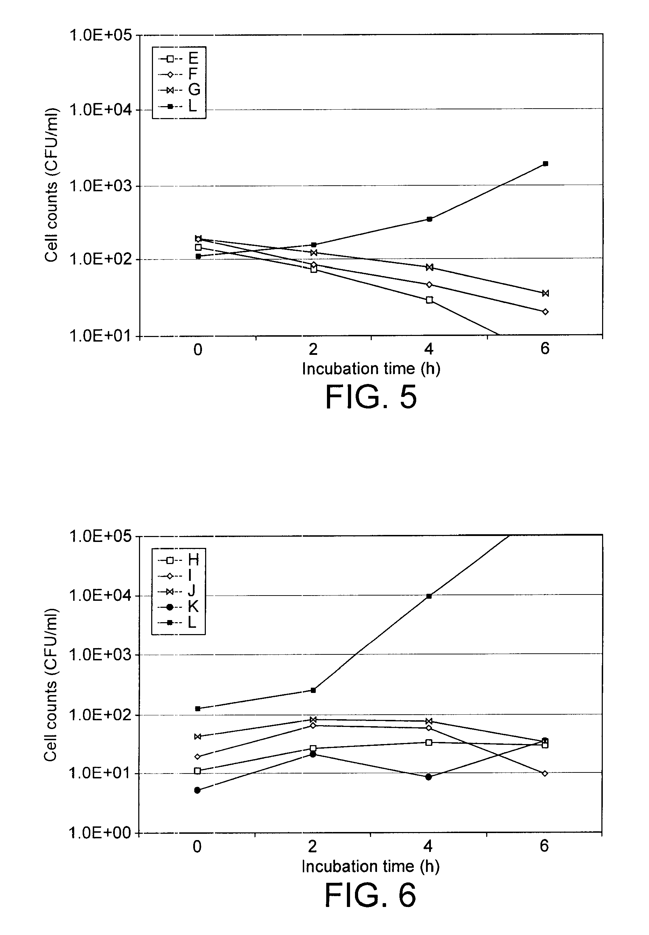

Figure 5 shows the effect of four formulas on growth *of P aeruginosa* at 30°C. It may be seen that formulas E, F and G according to the invention respectively restricted growth of the pathogen to acceptable levels for a period of 6 hours.

As may be seen from Figure 6, in formulas H, I and J according to the invention, growth *of E coli* at 37°C was for a period of 4 hours restricted to comparable levels to those found in an acidified formula containing lactic acid only and having a pH of 4.8.

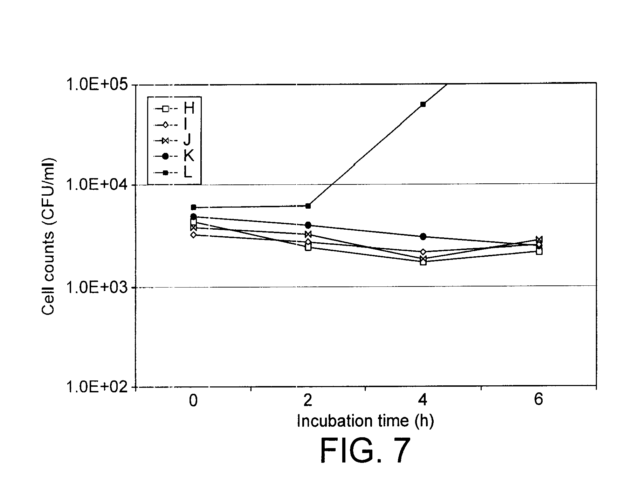

As may be seen from Figure 7, in formulas H, I and J according to the invention, growth of *P aeruginosa* at 37°C was for a period of 4 hours restricted to comparable levels to those found in an acidified formula containing lactic acid only and having a pH of 4.8.

### Example 3:- Taste Modulation

Two formulas according to the present invention, an experimental formula prepared for comparative purposes and a commercially available acidified infant formula sold under the trade mark NAN PELARGON ® were subjected to comparative sensory evaluation by a panel of 13 trained testers. The formulas were evaluated at 42°C under controlled conditions for overall flavour and acidity. The details of the formulas tested are shown in Table 3 below.

**Table 3**

| **Product** | **Lactic acid** **(1%w/w)** | **Calcium lactate** **(%w/w)** | **pH** |
|---|---|---|---|
| NAN PELARGON | 1.3 | 0.0 | 4.8 |
| Experimental 1 | 1.2 | 1.0 | 4.8 |
| Experimental 2 | 1.0 | 1.0 | 5.0 |
| Comparative | 1.4 | 0.0 | 4.6 |

All the formulas were prepared as follows. 1 litre of demineralised water was warmed to 42°C in a 1 litre Duran bottle in a water bath. 139g of infant formula powder was weighed in a 400ml glass beaker. 900g of the warmed demineralised water was poured into a 200ml glass beaker. The powder was poured into the water and whisked until completely dispersed. The dispersion was poured back into the Duran bottle and kept at 42°C in the water bath.

The relative acidity of the four infant formulas was determined by the testers on a scale from 1 (least acidic) to 4 (most acidic) using 1g lactic acid (50% w/w solution) in 1 litre Evian ® water as a reference. A Friedman test was then applied to the sums of the rankings per product at a global risk of 5%. The panel perceived differences in acidity between the four formulas (p>0.0001). The infant formula with the lowest pH (comparative formula) was perceived to be the most acid. The next most acid formula was perceived to be NAN PELARGON, then experimental formula 1, then experimental formula 2.

## Claims

1. A nutritional formula having a pH in the liquid state in the range from 4.8 to 5.2, which formula comprises, on a dry matter basis, lactic acid in an amount of not more than 2.0% and at least 0.5% of a salt of lactic acid.

2. A nutritional formula according to Claim 1 or 2, which comprises from 1.00 to 1.20% lactic acid.

3. A nutritional formula according to Claim 1 or 2, which comprises from 0.90 to 1.40% of a salt of lactic acid.

4. A nutritional formula according to any preceding claim, wherein the salt of lactic acid is calcium lactate.

5. A nutritional formula according to any preceding claim, wherein at least 70% of the total lactate ion content is L(+)-lactate.

6. A nutritional formula according to Claim 5 which is an infant formula.
